# EUROPEAN PATENT APPLICATION

(11) **EP 4 675 873 A2**
(43) Date of publication of application: **07.01.2026**
(21) Application number: 25186886.5
(22) Date of filing: 02.07.2025
(51) Int. Cl.: H02G 5/10, H01B 7/42

(54) **POWER TRANSMISSION MEMBER, POWER TRANSMISSION ASSEMBLY, ELECTRICAL CONNECTION ASSEMBLY, AND ELECTRICAL CONNECTION DEVICE**

(30) Priority: 05.07.2024 CN 202410905035
(71) Applicant: Tyco Electronics (Shanghai) Co., Ltd., Pilot Free Trade Zone Shanghai 200131 (CN)
(72) Inventor: Xia, Leilei, Shanghai, 200233 (CN); Zhu, Fangyue, Shanghai, 200233 (CN)
(74) Representative: Grünecker Patent- und Rechtsanwälte PartG mbB

(57) **Abstract**

The present invention discloses a power transmission member, a power transmission assembly, an electrical connection assembly, and an electrical connection device. The power transmission member includes: a pair of conductors, which have a flat shape and are oppositely spaced in a width direction of the conductors; and an insulator, which wraps around the pair of conductors and forms a cooling passage. The conductor has two side surfaces opposite to each other in the width direction of the conductor, and the cooling passage is located between the side surfaces of the pair of conductors, such that the pair of conductors can be cooled by a cooling fluid flowing through the cooling passage. The cooling passage of the present invention has a large cooling area and high cooling efficiency, such that the pair of conductors can be fully cooled by the cooling fluid flowing through the cooling passage. This effectively reduces the temperature rise of the power transmission member without increasing the cross-sectional area of the conductor.

## Description

### CROSS-REFERENCE TO RELATED APPLICATION

This application claims the benefit of Chinese Patent Application No. CN 202410905035.3 filed on July 5, 2024 in the State Intellectual Property Office of China, the whole disclosure of which is incorporated herein by reference.

### BACKGROUND OF THE INVENTION

### Field of the Invention

The present invention relates to a power transmission member, a power transmission assembly, an electrical connection assembly, and an electrical connection device.

### Description of the Related Art

In the prior art, with the increasingly high charging current of electric vehicles, the vehicle charging current now is required to be 600 A, and is expected to rise to 1000 A in the future. This leads to an increasing temperature rise of a power transmission member (e.g., a wire) connected to a charging dock or a charging gun. In order to reduce the temperature rise of the power transmission member, the charging dock and the charging gun, it is necessary to employ a large-cross-section power transmission member, for example, a large-cross-section copper or aluminum wire, but this will result in a large size and high costs.

### SUMMARY OF THE INVENTION

The present invention has been made to overcome or alleviate at least one aspect of the above-mentioned disadvantages.

According to an aspect of the present invention, there is provided a power transmission member. The power transmission member includes: a pair of conductors, which have a flat shape and are oppositely spaced in a width direction of the conductors; and an insulator, which wraps around the pair of conductors and forms a cooling passage. The conductor has two side surfaces opposite to each other in the width direction of the conductor, and the cooling passage is located between the side surfaces of the pair of conductors, such that the pair of conductors can be cooled by a cooling fluid flowing through the cooling passage.

According to an exemplary embodiment of the present invention, a single cooling passage is formed in the insulator, such that the pair of conductors can be simultaneously cooled by the cooling fluid flowing through the single cooling passage.

According to another exemplary embodiment of the present invention, the insulator has an isolation wall for isolating the cooling passage from the conductors, such that the cooling fluid flowing through the cooling passage cannot be in physical contact with the conductors.

According to another exemplary embodiment of the present invention, two cooling passages are formed in the insulator, and the insulator has an intermediate partition wall for separating the two cooling passages. The two cooling passages are respectively adjacent to the pair of conductors, such that the pair of conductors can be cooled respectively by the cooling fluid flowing through the two cooling passages.

According to another exemplary embodiment of the present invention, the insulator has isolation walls for isolating the cooling passages from the conductors, such that the cooling fluid flowing through the cooling passages cannot be in physical contact with the conductors.

According to another exemplary embodiment of the present invention, the conductor is an aluminum busbar, an aluminum alloy busbar, a copper busbar or a copper alloy busbar.

According to another exemplary embodiment of the present invention, the insulator is an injection molded part formed directly on the pair of conductors by means of an insert injection molding process, such that the pair of conductors and the insulator form an integral part.

According to another exemplary embodiment of the present invention, the pair of conductors of the power transmission member are identical to each other and are usable interchangeably.

According to another aspect of the present invention, there is provided a power transmission assembly. The power transmission assembly includes: a power transmission member as aforementioned; and an insulating cap sealingly fitted over an end portion of the power transmission member. A pipe joint is formed on the insulating cap and configured to be connected to a connecting pipe of a cooling loop, and the pipe joint is in communication with an end opening of the cooling passage of the power transmission member, to allow the cooling fluid to flow into or out of the cooling passage of the power transmission member through the pipe joint.

According to an exemplary embodiment of the present invention, the power transmission assembly further includes a seal pressed between the insulating cap and the power transmission member to achieve sealing between the insulating cap and the power transmission member.

According to another exemplary embodiment of the present invention, the power transmission assembly further includes a heat-shrinkable tube fitted over and heat-shrunk on the insulating cap and the power transmission member, to sealingly fix the insulating cap to the end portion of the power transmission member.

According to another exemplary embodiment of the present invention, the insulating cap includes: a peripheral wall fitted over the end portion of the power transmission member; and an end wall connected to the peripheral wall. The pipe joint is formed on the end wall, a threaded hole is formed in an end surface of the insulator, and a connection hole corresponding to the threaded hole is formed in the end wall. The power transmission assembly further includes a threaded member, the threaded member passes through the connection hole and is threaded into the threaded hole to fix the insulating cap to the end portion of the power transmission member.

According to another exemplary embodiment of the present invention, the power transmission assembly further includes a seal comprising an annular body. The annular body is pressed between the end wall of the insulating cap and an end surface of the power transmission member to achieve sealing between the insulating cap and the power transmission member. The connection hole and the threaded hole are located outside a region surrounded by the annular body of the seal, and the pipe joint and the end opening of the cooling passage of the power transmission member are located inside the region surrounded by the annular body of the seal.

According to another exemplary embodiment of the present invention, two cooling passages are formed in the insulator, and the insulator has an intermediate partition wall for separating the two cooling passages and an isolation wall for isolating the cooling passages from the conductors.

According to another exemplary embodiment of the present invention, the insulating cap has a single pipe joint, the single pipe joint is in communication with the end openings of the two cooling passages of the power transmission member, such that the cooling fluid can flow into or out of the two cooling passages simultaneously through the single pipe joint.

According to another exemplary embodiment of the present invention, the insulating cap has two pipe joints, the two pipe joints are respectively in communication with the end openings of the two cooling passages of the power transmission member, such that the cooling fluid can flow into or out of the two cooling passages respectively through the two pipe joints.

According to another exemplary embodiment of the present invention, the insulating cap further has a partition rib formed on an inner side of the end wall, and the seal further has an isolation rib located in the annular body and connected to the annular body. The isolation rib of the seal is pressed between the partition rib of the insulating cap and an end surface of the intermediate partition wall of the insulator, to isolate the end openings of the two cooling passages from the two pipe joints.

According to another aspect of the present invention, there is provided an electrical connection assembly. The electrical connection assembly includes: a power transmission member as aforementioned or a power transmission assembly as aforementioned; a first terminal electrically connected to one of the conductors of the power transmission member; and a second terminal electrically connected to the other conductor of the power transmission member.

According to an exemplary embodiment of the present invention, a first through hole is formed in one of the conductors of the power transmission member, a first opening is formed in the insulator, and a portion of the one conductor that surrounds the first through hole is exposed through the first opening. The one conductor is fastenable to the first terminal by means of a first bolt passing through the first through hole, and the first through hole has an oblong cross section to allow the first bolt to move in the first through hole before being tightened.

According to another exemplary embodiment of the present invention, the electrical connection assembly further includes: a first nut fixed to the first terminal; and a first bolt passing through the first through hole and threadedly connected to the first nut, to fasten the first terminal to the one conductor.

According to another exemplary embodiment of the present invention, a first threaded hole is formed in the first terminal; and the electrical connection assembly further includes: a first bolt passing through the first through hole and connected to the first threaded hole, to fasten the first terminal to the one conductor.

According to another exemplary embodiment of the present invention, a first opening is formed in the insulator, and a portion of the one conductor is exposed through the first opening and soldered to the first terminal.

According to another exemplary embodiment of the present invention, a second through hole is formed in the other conductor of the power transmission member, a second opening is formed in the insulator, and a portion of the other conductor that surrounds the second through hole is exposed through the second opening. The other conductor is fastenable to the second terminal by means of a second bolt passing through the second through hole, and the second through hole has an oblong cross section to allow the second bolt to move in the second through hole before being tightened.

According to another exemplary embodiment of the present invention, the electrical connection assembly further includes: a second nut fixed to the second terminal; and a second bolt passing through the second through hole and threadedly connected to the second nut, to fasten the second terminal to the other conductor.

According to another exemplary embodiment of the present invention, a second threaded hole is formed in the second terminal; and the electrical connection assembly further includes: a second bolt passing through the second through hole and connected to the second threaded hole, to fasten the second terminal to the other conductor.

According to another exemplary embodiment of the present invention, a second opening is formed in the insulator, and a portion of the other conductor is exposed through the second opening and soldered to the second terminal.

According to another aspect of the present invention, there is provided an electrical connection device. The electrical connection device includes: a housing; and an electrical connection assembly as aforementioned. The first terminal and the second terminal are mounted in the housing, and the power transmission member is led out of the housing.

According to an exemplary embodiment of the present invention, the electrical connection device is a charging dock or a charging gun.

In the aforementioned exemplary embodiments according to the present invention, a power transmission member is provided with a pair of conductors and a cooling passage located between the pair of conductors, such that the pair of conductors can be fully cooled by a cooling fluid flowing through the cooling passage. The cooling passage of the present invention has a large cooling area and a high cooling efficiency, can effectively reduce the temperature rise of the power transmission member without increasing the cross-sectional area of the conductors.

Furthermore, in the aforementioned exemplary embodiments according to the present invention, since the power transmission member integrates the pair of conductors, both the size and the transportation cost are reduced compared with a conventional single-conductor cable.

In addition, in the aforementioned exemplary embodiments according to the present invention, an insulator of the power transmission member is injection-molded on a pair of conductors in a single process, and accordingly the manufacturing cost can be reduced.

Moreover, in the aforementioned exemplary embodiments according to the present invention, the pair of conductors of the power transmission member are identical to each other and can be used interchangeably, so that the manufacturing cost can be further reduced.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative perspective view of a power transmission member according to a first embodiment of the present invention;
Figure 2 shows a longitudinal sectional view of the power transmission member according to the first embodiment of the present invention;
Figure 3 shows an illustrative perspective view of a power transmission member according to a second embodiment of the present invention;
Figure 4 shows a longitudinal sectional view of the power transmission member according to the second embodiment of the present invention;
Figure 5 shows an illustrative perspective view of a power transmission member according to a third embodiment of the present invention;
Figure 6 shows a longitudinal sectional view of the power transmission member according to the third embodiment of the present invention;
Figure 7 shows an illustrative perspective view of a power transmission member according to a fourth embodiment of the present invention;
Figure 8 shows a longitudinal sectional view of the power transmission member according to the fourth embodiment of the present invention;
Figure 9 shows an illustrative perspective view of a power transmission member according to a fifth embodiment of the present invention;
Figure 10 shows a longitudinal sectional view of the power transmission member according to the fifth embodiment of the present invention;
Figure 11 shows an illustrative perspective view of a power transmission member according to a sixth embodiment of the present invention;
Figure 12 shows a longitudinal sectional view of the power transmission member according to the sixth embodiment of the present invention;
Figure 13 shows an illustrative perspective view of a power transmission member according to a seventh embodiment of the present invention;
Figure 14 shows a longitudinal sectional view of the power transmission member according to the seventh embodiment of the present invention;
Figure 15 shows an illustrative perspective view of a power transmission assembly according to a first embodiment of the present invention;
Figure 16 shows a longitudinal sectional view of the power transmission assembly according to the first embodiment of the present invention;
Figure 17 shows an illustrative exploded view of the power transmission assembly according to the first embodiment of the present invention;
Figure 18 shows an exploded sectional view of the power transmission assembly according to the first embodiment of the present invention;
Figure 19 shows a plan sectional view of the power transmission assembly according to the first embodiment of the present invention;
Figure 20 shows an illustrative perspective view of a power transmission assembly according to a second embodiment of the present invention;
Figure 21 shows a longitudinal sectional view of the power transmission assembly according to the second embodiment of the present invention;
Figure 22 shows an illustrative exploded view of the power transmission assembly according to the second embodiment of the present invention;
Figure 23 shows an exploded sectional view of the power transmission assembly according to the second embodiment of the present invention; and
Figure 24 shows a plan sectional view of the power transmission assembly according to the second embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. **In** other instances, well-known structures and devices are schematically shown in order to simplify the drawing.

According to a general concept of the present invention, there is provided a power transmission member. The power transmission member includes: a pair of conductors; and an insulator, the pair of conductors are wrapped in the insulator. A cooling passage allowing for the passage of a cooling fluid is formed in the insulator, and the cooling passage is located between the pair of conductors, such that the pair of conductors can be cooled by the cooling fluid flowing through the cooling passage.

According to another general concept of the present invention, there is provided a power transmission assembly. The power transmission assembly includes: a power transmission member as aforementioned; and an insulating cap sealingly fitted over an end portion of the power transmission member. A pipe joint is formed on the insulating cap and configured to be connected to a connecting pipe of a cooling loop, and the pipe joint is in communication with an end opening of the cooling passage of the power transmission member, to allow the cooling fluid to flow into or out of the cooling passage of the power transmission member through the pipe joint.

According to another general concept of the present invention, there is provided an electrical connection assembly. The electrical connection assembly includes: a power transmission member as aforementioned or a power transmission assembly as aforementioned; a first terminal electrically connected to one of the conductors of the power transmission member; and a second terminal electrically connected to the other conductor of the power transmission member.

According to another general concept of the present invention, there is provided an electrical connection device. The electrical connection device includes: a housing; and an electrical connection assembly as aforementioned. The first terminal and the second terminal are mounted in the housing, and the power transmission member is led out of the housing.

According to another general concept of the present invention, there is provided a power transmission member. The power transmission member includes: a pair of conductors, which have a flat shape and are oppositely spaced in a width direction of the conductors; and an insulator, which wraps around the pair of conductors and forms a cooling passage. The conductor has two side surfaces opposite to each other in the width direction of the conductor, and the cooling passage is located between the side surfaces of the pair of conductors, such that the pair of conductors can be cooled by a cooling fluid flowing through the cooling passage.

According to another general concept of the present invention, there is provided a power transmission assembly. The power transmission assembly includes: a power transmission member as aforementioned; and an insulating cap sealingly fitted over an end portion of the power transmission member. A pipe joint is formed on the insulating cap and configured to be connected to a connecting pipe of a cooling loop, and the pipe joint is in communication with an end opening of the cooling passage of the power transmission member, to allow the cooling fluid to flow into or out of the cooling passage of the power transmission member through the pipe joint.

According to another general concept of the present invention, there is provided an electrical connection assembly. The electrical connection assembly includes: a power transmission member as aforementioned or a power transmission assembly as aforementioned; a first terminal electrically connected to one of the conductors of the power transmission member; and a second terminal electrically connected to the other conductor of the power transmission member.

According to another general concept of the present invention, there is provided an electrical connection device. The electrical connection device includes: a housing; and an electrical connection assembly as aforementioned. The first terminal and the second terminal are mounted in the housing, and the power transmission member is led out of the housing.

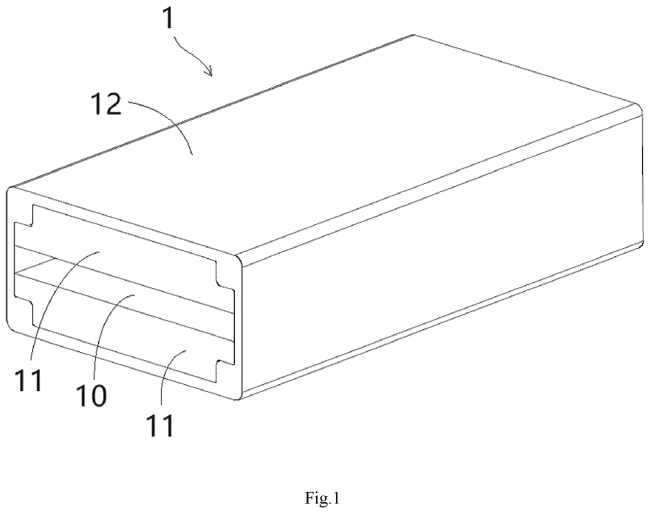

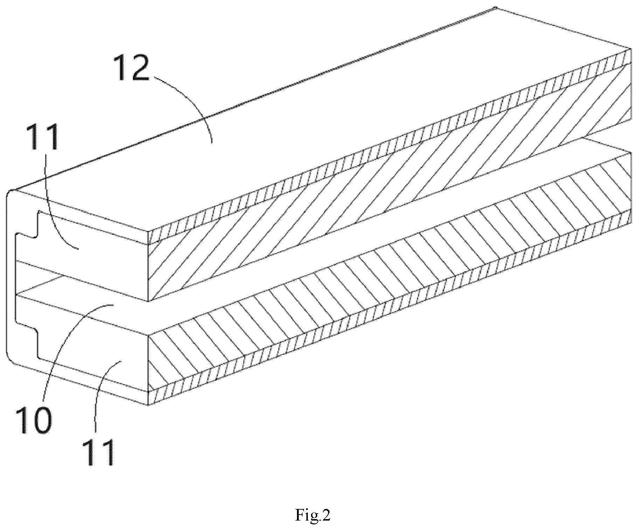

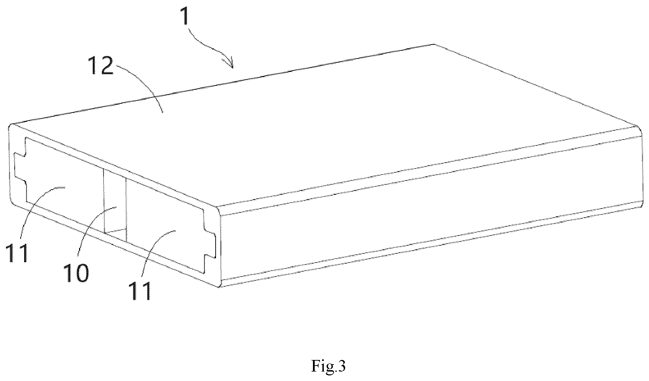

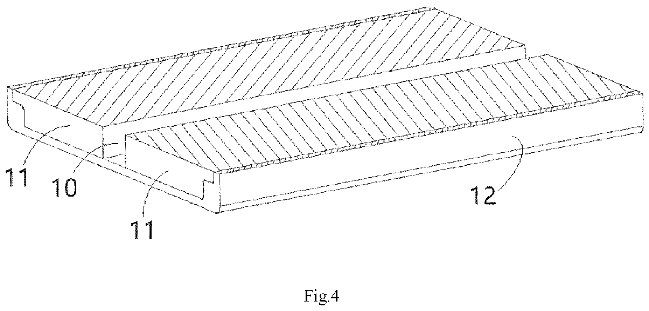

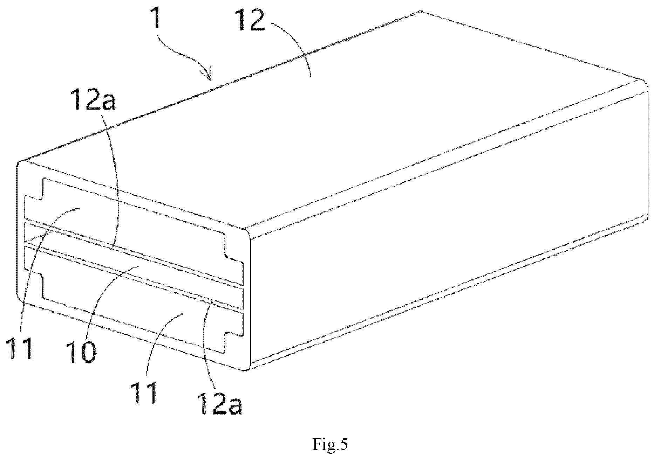

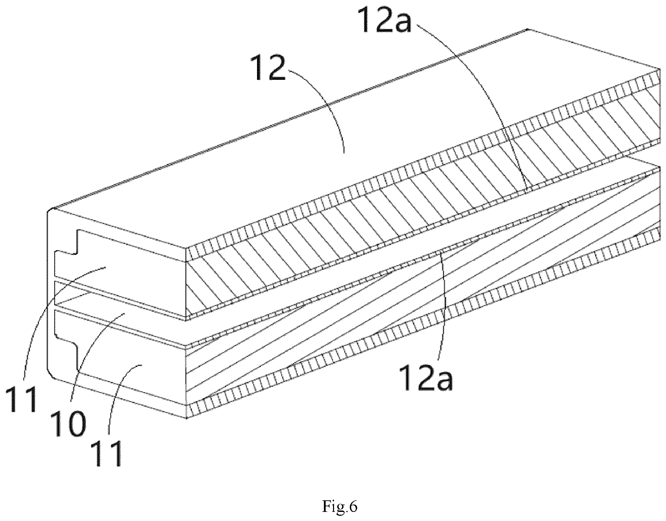

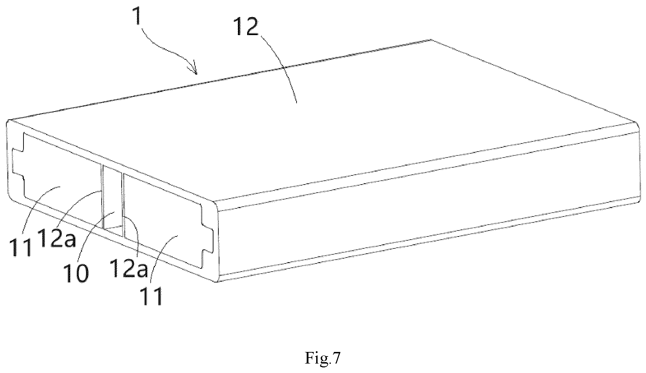

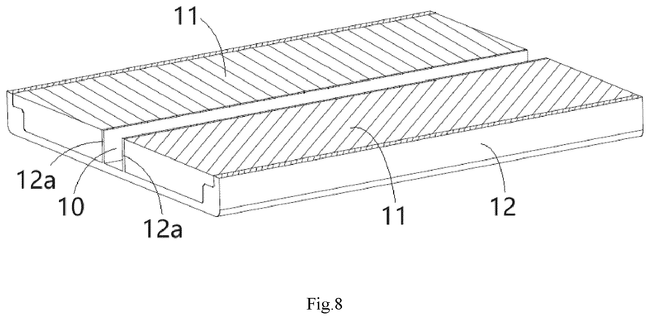

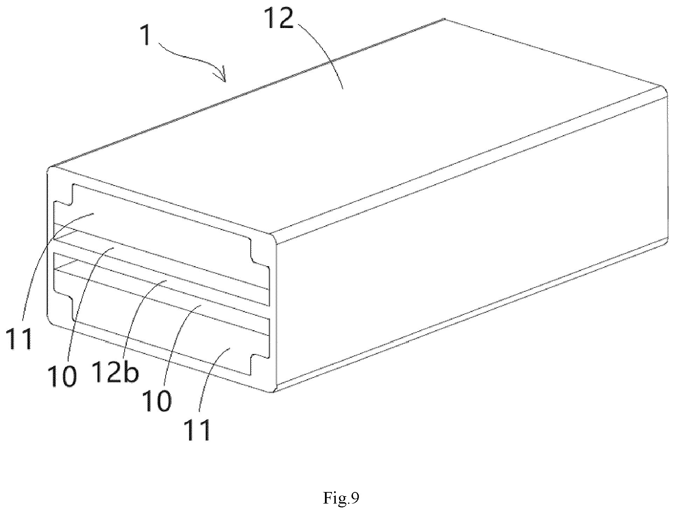

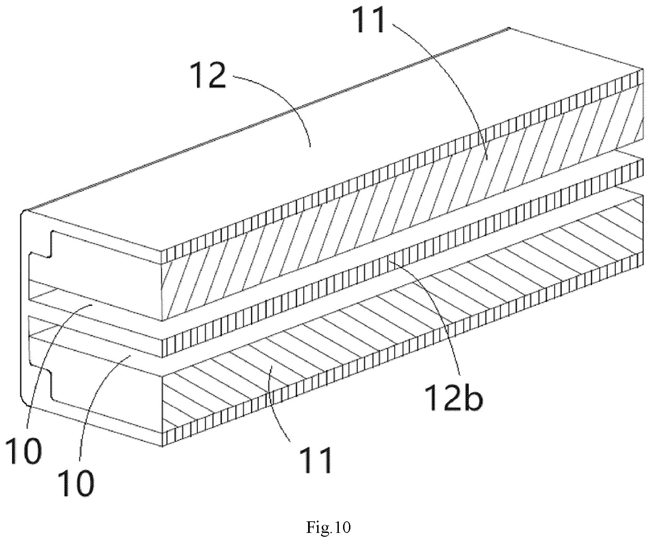

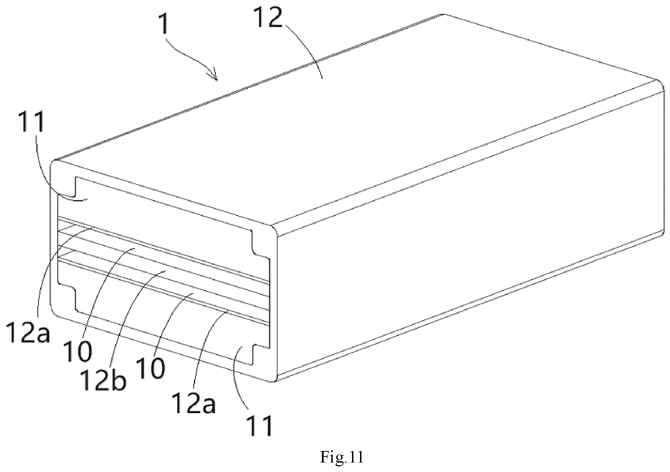

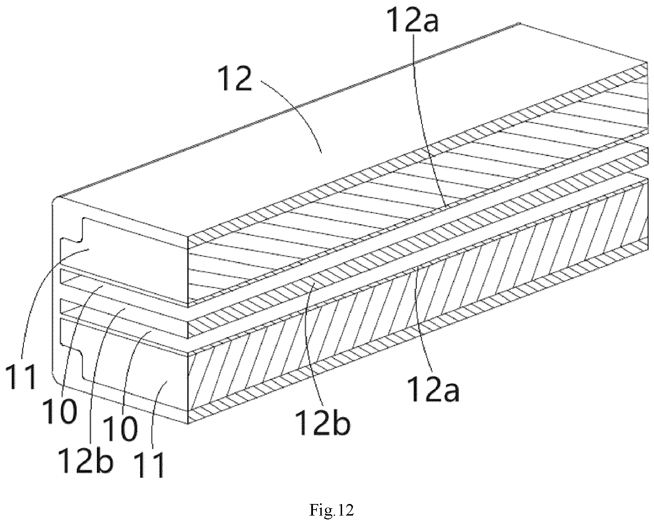

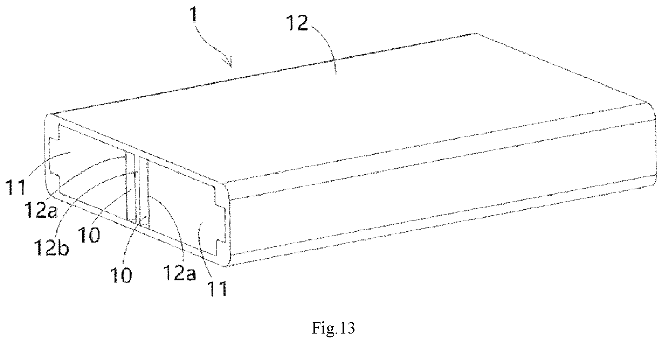

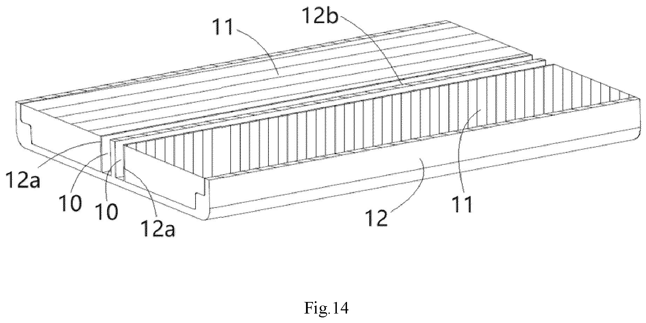

Figures 1 to 14 show a power transmission member 1 according to the present invention. Wherein Figure 1 shows an illustrative perspective view of a power transmission member according to a first embodiment of the present invention; Figure 2 shows a longitudinal sectional view of the power transmission member according to the first embodiment of the present invention; Figure 3 shows an illustrative perspective view of a power transmission member according to a second embodiment of the present invention; Figure 4 shows a longitudinal sectional view of the power transmission member according to the second embodiment of the present invention; Figure 5 shows an illustrative perspective view of a power transmission member according to a third embodiment of the present invention; Figure 6 shows a longitudinal sectional view of the power transmission member according to the third embodiment of the present invention; Figure 7 shows an illustrative perspective view of a power transmission member according to a fourth embodiment of the present invention; Figure 8 shows a longitudinal sectional view of the power transmission member according to the fourth embodiment of the present invention; Figure 9 shows an illustrative perspective view of a power transmission member according to a fifth embodiment of the present invention; Figure 10 shows a longitudinal sectional view of the power transmission member according to the fifth embodiment of the present invention; Figure 11 shows an illustrative perspective view of a power transmission member according to a sixth embodiment of the present invention; Figure 12 shows a longitudinal sectional view of the power transmission member according to the sixth embodiment of the present invention; Figure 13 shows an illustrative perspective view of a power transmission member according to a seventh embodiment of the present invention; Figure 14 shows a longitudinal sectional view of the power transmission member according to the seventh embodiment of the present invention.

As shown in Figures 1 to 14, in an exemplary embodiment of the present invention, a power transmission member 1 is disclosed. The power transmission member 1 includes: a pair of conductors 11 and an insulator 12. The pair of conductors 11 are wrapped in the insulator 12. A cooling passage 10 allowing for the passage of a cooling fluid is formed in the insulator 12, and the cooling passage 10 is located between the pair of conductors 11, such that the pair of conductors 11 can be cooled by the cooling fluid flowing through the cooling passage 10.

As shown in Figures 1 to 8, in the illustrated embodiment, a single cooling passage 10 is formed in the insulator 12, and the single cooling passage 10 is located between the pair of conductors 11, such that the pair of conductors 11 can be simultaneously cooled by the cooling fluid flowing through the single cooling passage 10.

As shown in Figures 9 to 12 and Figures 13 to 14, in the illustrated embodiment, two cooling passages 10 are formed in the insulator 12, the insulator 12 has an intermediate partition wall 12b for separating the two cooling passages 10, and the pair of conductors 11 is isolated by the intermediate partition wall 12b. The two cooling passages 10 are respectively adjacent to the pair of conductors 11, such that one of the conductors 11 can be cooled by the cooling fluid flowing through a respective cooling passage 10, and the other conductor 11 can be cooled by the cooling fluid flowing through the other cooling passage 10.

As shown in Figures 1 to 4 and Figures 9 to 10, in the illustrated embodiment, no isolation wall is provided between at least part of the cooling passage 10 and the conductors 11, such that the cooling fluid flowing through the cooling passage 10 can be directly in physical contact with the conductors 11. This improves cooling efficiency, but requires that the cooling fluid be electrically insulated.

As shown in Figures 1 to 4 and Figures 9 to 10, in the illustrated embodiment, no isolation wall is provided between the cooling passage 10 and the conductors 11, such that the cooling fluid flowing through the cooling passage 10 can be directly in physical contact with the conductors 11. This improves cooling efficiency, but requires that the cooling fluid be electrically insulated.

As shown in Figures 5 to 8, Figures 11 to 12 and Figures 13 to 14, in the illustrated embodiment, the insulator 12 includes an isolation wall 12a located between the cooling passage 10 and the conductors 11, such that the cooling fluid flowing through the cooling passages 10 cannot be in physical contact with the conductors 11.

As shown in Figures 1 to 2, Figures 5 to 6 and Figures 9 to 12, in the illustrated embodiment, the conductor 11 is in a flat shape, and has a top surface and a bottom surface opposite to each other in a thickness direction of the conductor and two side surfaces opposite to each other in a width direction of the conductor. The pair of conductors 11 are arranged opposite and spaced apart from each other in the thickness direction of the conductors, and the cooling passage 10 is located between the bottom surface of one of the conductors 11 and the top surface of the other conductor 11.

As shown in Figures 3 to 4, Figures 7 to 8 and Figures 13 to 14, in the illustrated embodiment, the conductor 11 is in a flat shape, and has a top surface and a bottom surface opposite to each other in a thickness direction of the conductor and two side surfaces opposite to each other in a width direction of the conductor. The pair of conductors 11 are arranged opposite and spaced apart from each other in the width direction of the conductors, and the cooling passage 10 is located between the side surface of one of the conductors 11 and the side surface of the other conductor 11.

As shown in Figures 1 to 14, in the illustrated embodiment, the conductor 11 is a metal busbar, for example, an aluminum busbar, an aluminum alloy busbar, a copper busbar or a copper alloy busbar.

As shown in Figures 1 to 14, in the illustrated embodiment, the insulator 12 is an injection molded part formed directly on the pair of conductors 11 by means of an insert injection molding process, such that the pair of conductors 11 and the insulator 12 form an integral part.

As shown in Figures 1 to 14, in the illustrated embodiment, the pair of conductors of the power transmission member 1 are identical to each other and are usable interchangeably.

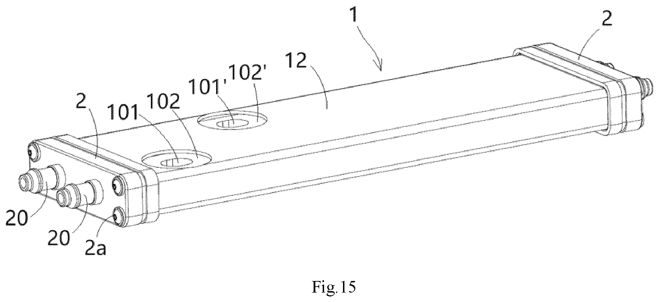

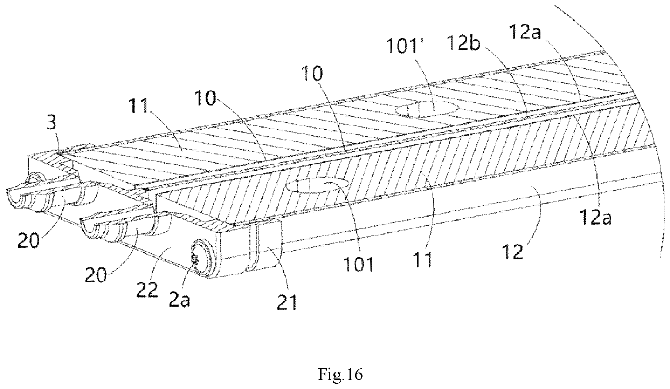

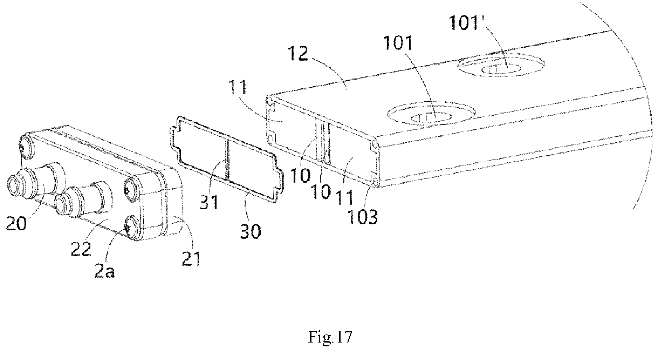

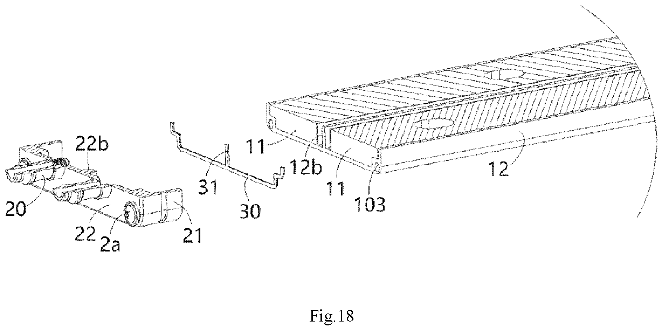

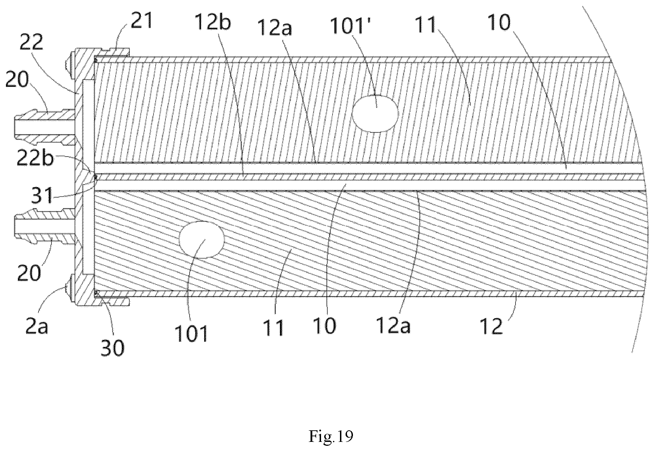

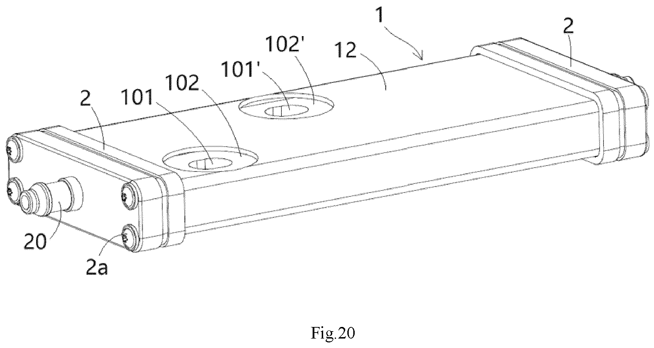

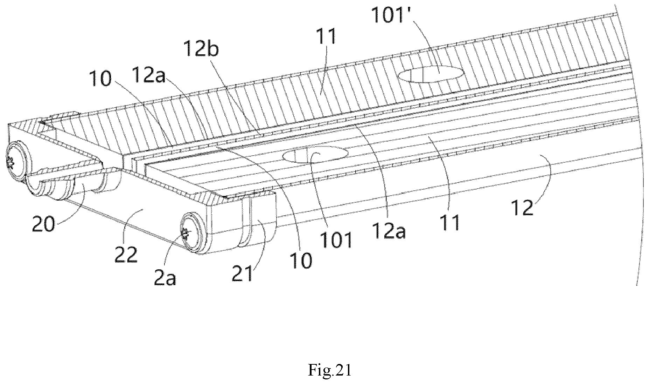

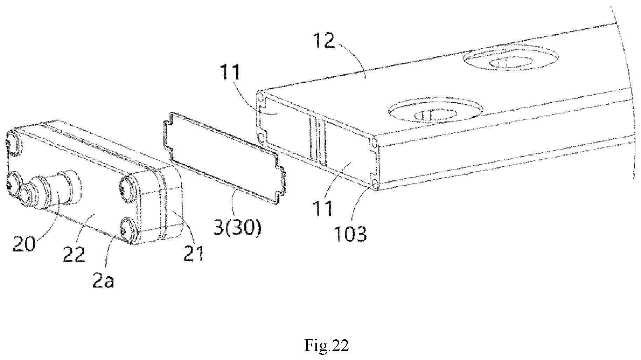

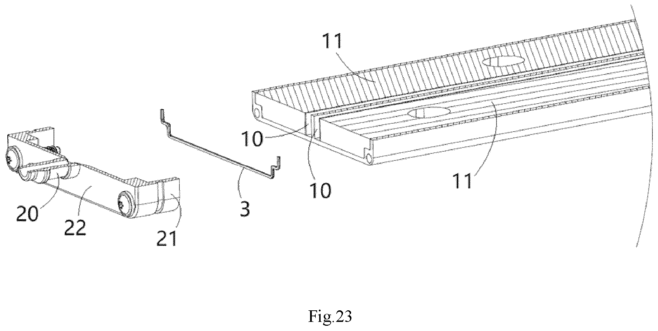

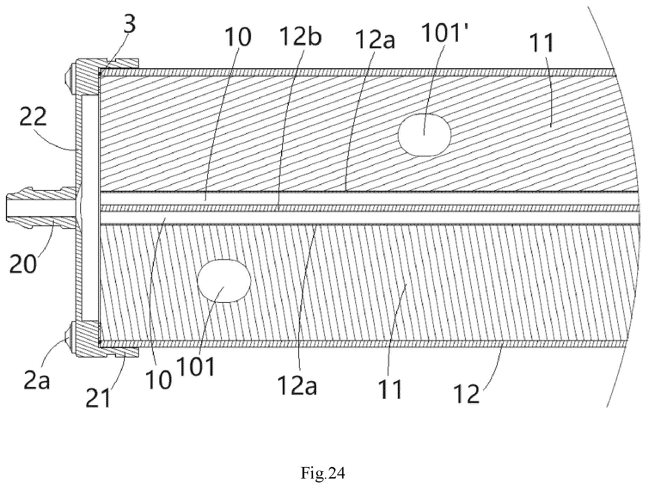

Figure 15 shows an illustrative perspective view of a power transmission assembly according to a first embodiment of the present invention; Figure 16 shows a longitudinal sectional view of the power transmission assembly according to the first embodiment of the present invention; Figure 17 shows an illustrative exploded view of the power transmission assembly according to the first embodiment of the present invention; Figure 18 shows an exploded sectional view of the power transmission assembly according to the first embodiment of the present invention; Figure 19 shows a plan sectional view of the power transmission assembly according to the first embodiment of the present invention; Figure 20 shows an illustrative perspective view of a power transmission assembly according to a second embodiment of the present invention; Figure 21 shows a longitudinal sectional view of the power transmission assembly according to the second embodiment of the present invention; Figure 22 shows an illustrative exploded view of the power transmission assembly according to the second embodiment of the present invention; Figure 23 shows an exploded sectional view of the power transmission assembly according to the second embodiment of the present invention; and Figure 24 shows a plan sectional view of the power transmission assembly according to the second embodiment of the present invention.

As shown in Figures 15 to 24, in another exemplary embodiment of the present invention, a power transmission assembly is disclosed. The power transmission assembly includes: a power transmission member 1 as aforementioned and an insulating cap 2. The insulating cap 2 is sealingly fitted over an end portion of the power transmission member 1. A pipe joint 20 is formed on the insulating cap 2 and configured to be connected to a connecting pipe of a cooling loop (not shown), and the pipe joint 20 is in communication with an end opening of the cooling passage 10 of the power transmission member 1, to allow the cooling fluid to flow into or out of the cooling passage 10 of the power transmission member 1 through the pipe joint 20.

As shown in Figures 15 to 24, in the illustrated embodiment, the power transmission assembly further includes a seal 3. The seal 3 is pressed between the insulating cap 2 and the power transmission member 1 to achieve sealing between the insulating cap and the power transmission member.

However, the present invention is not restricted by the illustrated embodiments. For example, in another exemplary embodiment of the present invention, the power transmission assembly further includes a heat-shrinkable tube (not shown), the heat-shrinkable tube is fitted over and heat-shrunk on the insulating cap 2 and the power transmission member 1, to sealingly fix the insulating cap 2 to the end portion of the power transmission member 1.

As shown in Figures 15 to 24, in the illustrated embodiment, the insulating cap 2 includes: a peripheral wall 21 and an end wall 22. The peripheral wall 21 is fitted over the end portion of the power transmission member 1. The end wall 22 is connected to the peripheral wall 21. The pipe joint 20 is formed on the end wall 22, a threaded hole 103 is formed in an end surface of the insulator 12, and a connection hole corresponding to the threaded hole 103 is formed in the end wall 22. The power transmission assembly further includes a threaded member 2a, the threaded member 2a passes through the connection hole and is threaded into the threaded hole 103 to fix the insulating cap 2 to the end portion of the power transmission member 1.

As shown in Figures 15 to 24, in the illustrated embodiment, the power transmission assembly further includes a seal 3. The seal 3 includes an annular body 30, and the annular body 30 is pressed between the end wall 22 of the insulating cap 2 and an end surface of the power transmission member 1 to achieve sealing between the insulating cap and the power transmission member. The connection hole and the threaded hole 103 are located outside a region surrounded by the annular body 30 of the seal 3, and the pipe joint 20 and the end opening of the cooling passage 10 of the power transmission member 1 are located inside the region surrounded by the annular body 30 of the seal 3.

As shown in Figures 15 to 24, in the illustrated embodiment, the conductor 11 is in a flat shape, and has a top surface and a bottom surface opposite to each other in a thickness direction of the conductor and two side surfaces opposite to each other in a width direction of the conductor. The pair of conductors 11 are arranged opposite and spaced apart from each other in the width direction of the conductors, and the cooling passage 10 is located between the side surface of one of the conductors 11 and the side surface of the other conductor 11.

As shown in Figures 15 to 24, in the illustrated embodiment, two cooling passages 10 are formed in the insulator 12, and the insulator 12 has an intermediate partition wall 12b for separating the two cooling passages 10 and an isolation wall 12a for isolating the cooling passages 10 from the conductors 11.

As shown in Figures 20 to 24, in the illustrated embodiment, the insulating cap 2 has a single pipe joint 20. The single pipe joint 20 is in communication with the end openings of the two cooling passages 10 of the power transmission member 1, such that the cooling fluid can flow into or out of the two cooling passages 10 simultaneously through the single pipe joint 20.

As shown in Figures 15 to 19, in the illustrated embodiment, the insulating cap 2 has two pipe joints 20. The two pipe joints 20 are respectively in communication with the end openings of the two cooling passages 10 of the power transmission member 1, such that the cooling fluid can flow into or out of the two cooling passages 10 respectively through the two pipe joints 20.

As shown in Figures 15 to 19, in the illustrated embodiment, the insulating cap 2 further has a partition rib 22b formed on an inner side of the end wall 22, and the seal 3 further has an isolation rib 31 located in the annular body 30 and connected to the annular body 30. The isolation rib 31 of the seal 3 is pressed between the partition rib 22b of the insulating cap 2 and an end surface of the intermediate partition wall 12b of the insulator 12, to isolate the end openings of the two cooling passages from the two pipe joints 20.

As shown in Figures 1 to 24, in another exemplary embodiment of the present invention, an electrical connection assembly is disclosed. The electrical connection assembly includes: a power transmission member 1 as aforementioned or a power transmission assembly as aforementioned; a first terminal (not shown); and a second terminal (not shown). The first terminal is electrically connected to one of the conductors 11 of the power transmission member 1. The second terminal is electrically connected to the other conductor 11 of the power transmission member 1.

As shown in Figures 1 to 24, in the illustrated embodiment, a first through hole 101 is formed in one of the conductors 11 of the power transmission member 1, a first opening 102 is formed in the insulator 12, and a portion of the one conductor 11 that surrounds the first through hole 101 is exposed through the first opening 102. The one conductor 11 is fastenable to the first terminal by means of a first bolt passing through the first through hole 101, and the first through hole 101 has an oblong cross section to allow the first bolt to move in the first through hole 101 before being tightened.

As shown in Figures 1 to 24, in the illustrated embodiment, the electrical connection assembly further includes: a first nut (not shown) and a first bolt (not shown). The first nut is fixed to the first terminal. The first bolt passes through the first through hole 101 and is threadedly connected to the first nut, to fasten the first terminal to the one conductor 11.

As shown in Figures 1 to 24, in another exemplary embodiment of the present invention, a first threaded hole is formed in the first terminal. The electrical connection assembly further includes a first bolt (not shown). The first bolt passes through the first through hole 101 and is connected to the first threaded hole, to fasten the first terminal to the one conductor 11.

As shown in Figures 1 to 24, in another exemplary embodiment of the present invention, a first opening 102 is formed in the insulator 12, and a portion of the one conductor 11 is exposed through the first opening 102 and soldered to the first terminal.

As shown in Figures 1 to 24, in the illustrated embodiment, a second through hole 101' is formed in the other conductor 11 of the power transmission member 1, a second opening 102' is formed in the insulator 12, and a portion of the other conductor 11 that surrounds the second through hole 101' is exposed through the second opening 102'. The other conductor 11 is fastenable to the second terminal by means of a second bolt passing through the second through hole 101', and the second through hole 101' has an oblong cross section to allow the second bolt to move in the second through hole 101' before being tightened.

As shown in Figures 1 to 24, in the illustrated embodiment, the electrical connection assembly further includes: a second nut (not shown) and a second bolt (not shown). The second nut is fixed to the second terminal. The second bolt passes through the second through hole 101' and is threadedly connected to the second nut, to fasten the second terminal to the other conductor 11.

As shown in Figures 1 to 24, in another exemplary embodiment of the present invention, a second threaded hole is formed in the second terminal. The electrical connection assembly further includes a second bolt. The second bolt passes through the second through hole 101' and is connected to the second threaded hole, to fasten the second terminal to the other conductor 11.

As shown in Figures 1 to 24, in another exemplary embodiment of the present invention, a second opening 102' is formed in the insulator 12, and a portion of the other conductor 11 is exposed through the second opening 102' and soldered to the second terminal.

As shown in Figures 1 to 24, in another exemplary embodiment of the present invention, an electrical connection device is disclosed. The electrical connection device includes: a housing (not shown); and an electrical connection assembly as aforementioned. The first terminal and the second terminal are mounted in the housing, and the power transmission member 1 is led out of the housing.

As shown in Figures 1 to 24, in another exemplary embodiment of the present invention, the electrical connection device is a charging dock or a charging gun.

As shown in Figures 15 to 24, in another exemplary embodiment of the present invention, a power transmission member 1 is disclosed. The power transmission member 1 includes a pair of conductors 11 and an insulator 12. The pair of conductors 11 are in a flat shape, and are arranged opposite and spaced apart from each other in the width direction of the conductors. The pair of conductors 11 are wrapped in the insulator 12, and a cooling passage 10 is formed in the insulator 12. The conductor 11 has two side surfaces opposite to each other in a width direction of the conductor, and the cooling passage 10 is located between the side surfaces of the pair of conductors 11, such that the pair of conductors 11 can be cooled by the cooling fluid flowing through the cooling passage 10.

As shown in Figures 20 to 24, in the illustrated embodiment, a single cooling passage 10 is formed in the insulator 12, such that the pair of conductors 11 can be simultaneously cooled by the cooling fluid flowing through the single cooling passage 10.

As shown in Figures 15 to 24, in the illustrated embodiment, the insulator 12 has an isolation wall 12a for isolating the cooling passages 10 from the conductors 11, such that the cooling fluid flowing through the cooling passages 10 cannot be in physical contact with the conductors 11.

As shown in Figures 15 to 19, in the illustrated embodiment, two cooling passages 10 are formed in the insulator 12, and the insulator 12 has an intermediate partition wall 12b for separating the two cooling passages 10. The two cooling passages 10 are respectively adjacent to the pair of conductors 11, such that the pair of conductors 11 can be cooled respectively by the cooling fluid flowing through the two cooling passages 10.

As shown in Figures 15 to 24, in the illustrated embodiment, the insulator 12 has an isolation wall 12a for isolating the cooling passages 10 from the conductors 11, such that the cooling fluid flowing through the cooling passages 10 cannot be in physical contact with the conductors 11.

As shown in Figures 15 to 24, in the illustrated embodiment, the conductor 11 is a metal busbar, for example, an aluminum busbar, an aluminum alloy busbar, a copper busbar or a copper alloy busbar.

As shown in Figures 15 to 24, in the illustrated embodiment, the insulator 12 is an injection molded part formed directly on the pair of conductors 11 by means of an insert injection molding process, such that the pair of conductors 11 and the insulator 12 form an integral part.

As shown in Figures 15 to 24, in the illustrated embodiment, the pair of conductors of the power transmission member 1 are identical to each other and are usable interchangeably.

As shown in Figures 15 to 24, in another exemplary embodiment of the present invention, a power transmission assembly is disclosed. The power transmission assembly includes a power transmission member 1 as aforementioned and an insulating cap 2. The insulating cap 2 is sealingly fitted over an end portion of the power transmission member 1. A pipe joint 20 is formed on the insulating cap 2 and configured to be connected to a connecting pipe of a cooling loop, and the pipe joint 20 is in communication with an end opening of the cooling passage 10 of the power transmission member 1, to allow the cooling fluid to flow into or out of the cooling passage 10 of the power transmission member 1 through the pipe joint 20.

As shown in Figures 15 to 24, in the illustrated embodiment, the power transmission assembly further includes a seal 3. The seal 3 is pressed between the insulating cap 2 and the power transmission member 1 to achieve sealing between the insulating cap and the power transmission member.

The present invention is not restricted by the illustrated embodiments. For example, in another exemplary embodiment of the present invention, the power transmission assembly further includes a heat-shrinkable tube (not shown), the heat-shrinkable tube is fitted over and heat-shrunk on the insulating cap 2 and the power transmission member 1, to sealingly fix the insulating cap 2 to the end portion of the power transmission member 1.

As shown in Figures 15 to 24, in the illustrated embodiment, the insulating cap 2 includes: a peripheral wall 21 and an end wall 22. The peripheral wall 21 is fitted over the end portion of the power transmission member 1. The end wall 22 is connected to the peripheral wall 21. The pipe joint 20 is formed on the end wall 22, a threaded hole 103 is formed in an end surface of the insulator 12, and a connection hole corresponding to the threaded hole 103 is formed in the end wall 22. The power transmission assembly further includes a threaded member 2a, the threaded member 2a passes through the connection hole and is threaded into the threaded hole 103 to fix the insulating cap 2 to the end portion of the power transmission member 1.

As shown in Figures 15 to 24, in the illustrated embodiment, the power transmission assembly further includes a seal 3. The seal 3 includes an annular body 30, and the annular body 30 is pressed between the end wall 22 of the insulating cap 2 and an end surface of the power transmission member 1 to achieve sealing between the insulating cap and the power transmission member. The connection hole and the threaded hole 103 are located outside a region surrounded by the annular body 30 of the seal 3, and the pipe joint 20 and the end opening of the cooling passage 10 of the power transmission member 1 are located inside the region surrounded by the annular body 30 of the seal 3.

As shown in Figures 15 to 19, in the illustrated embodiment, two cooling passages 10 are formed in the insulator 12, and the insulator 12 has an intermediate partition wall 12b for separating the two cooling passages 10 and an isolation wall 12a for isolating the cooling passages 10 from the conductors 11.

As shown in Figures 20 to 24, in the illustrated embodiment, the insulating cap 2 has a single pipe joint 20, and the single pipe joint 20 is in communication with the end openings of the two cooling passages 10 of the power transmission member 1, such that the cooling fluid can flow into or out of the two cooling passages 10 simultaneously through the single pipe joint 20.

As shown in Figures 15 to 19, in the illustrated embodiment, the insulating cap 2 has two pipe joints 20, and the two pipe joints 20 are respectively in communication with the end openings of the two cooling passages 10 of the power transmission member 1, such that the cooling fluid can flow into or out of the two cooling passages 10 respectively through the two pipe joints 20.

As shown in Figures 15 to 19, in the illustrated embodiment, the insulating cap 2 further has a partition rib 22b formed on an inner side of the end wall 22, and the seal 3 further has an isolation rib 31 located in the annular body 30 and connected to the annular body 30. The isolation rib 31 of the seal 3 is pressed between the partition rib 22b of the insulating cap 2 and an end surface of the intermediate partition wall 12b of the insulator 12, to isolate the end openings of the two cooling passages from the two pipe joints 20.

As shown in Figures 15 to 24, in another exemplary embodiment of the present invention, an electrical connection assembly is disclosed. The electrical connection assembly includes: a power transmission member 1 or a power transmission assembly; a first terminal (not shown); and a second terminal (not shown). The first terminal is electrically connected to one of the conductors 11 of the power transmission member 1, and the second terminal is electrically connected to the other conductor 11 of the power transmission member 1.

As shown in Figures 15 to 24, in the illustrated embodiment, a first through hole 101 is formed in one of the conductors 11 of the power transmission member 1, a first opening 102 is formed in the insulator 12, and a portion of the one conductor 11 that surrounds the first through hole 101 is exposed through the first opening 102. The one conductor 11 is fastenable to the first terminal by means of a first bolt passing through the first through hole 101, and the first through hole 101 has an oblong cross section to allow the first bolt to move in the first through hole 101 before being tightened.

As shown in Figures 15 to 24, in the illustrated embodiment, the electrical connection assembly further includes a first nut (not shown) and a first bolt (not shown). The first nut is fixed to the first terminal. The first bolt passes through the first through hole 101 and is threadedly connected to the first nut, to fasten the first terminal to the one conductor 11.

As shown in Figures 15 to 24, in another exemplary embodiment of the present invention, a first threaded hole is formed in the first terminal. The electrical connection assembly further includes a first bolt. The first bolt passes through the first through hole 101 and is connected to the first threaded hole, to fasten the first terminal to the one conductor 11.

As shown in Figures 15 to 24, in another exemplary embodiment of the present invention, a first opening 102 is formed in the insulator 12, and a portion of the one conductor 11 is exposed through the first opening 102 and soldered to the first terminal.

As shown in Figures 15 to 24, in the illustrated embodiment, a second through hole 101' is formed in the other conductor 11 of the power transmission member 1, a second opening 102' is formed in the insulator 12, and a portion of the other conductor 11 that surrounds the second through hole 101' is exposed through the second opening 102'. The other conductor 11 is fastenable to the second terminal by means of a second bolt passing through the second through hole 101', and the second through hole 101' has an oblong cross section to allow the second bolt to move in the second through hole 101' before being tightened.

As shown in Figures 15 to 24, in the illustrated embodiment, the electrical connection assembly further includes a second nut (not shown) and a second bolt (not shown). The second nut is fixed to the second terminal. The second bolt passes through the second through hole 101' and is threadedly connected to the second nut, to fasten the second terminal to the other conductor 11.

As shown in Figures 15 to 24, in another exemplary embodiment of the present invention, a second threaded hole is formed in the second terminal. The electrical connection assembly further includes a second bolt. The second bolt passes through the second through hole 101' and is connected to the second threaded hole, to fasten the second terminal to the other conductor 11.

As shown in Figures 15 to 24, in another exemplary embodiment of the present invention, a second opening 102' is formed in the insulator 12, and a portion of the other conductor 11 is exposed through the second opening 102' and soldered to the second terminal.

As shown in Figures 15 to 24, in another exemplary embodiment of the present invention, an electrical connection device is disclosed. The electrical connection device includes a housing (not shown) and an electrical connection assembly as aforementioned. The first terminal and the second terminal are mounted in the housing, and the power transmission member 1 is led out of the housing.

As shown in Figures 15 to 24, in the illustrated embodiment, the electrical connection device is a charging dock or a charging gun.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A power transmission member, comprising:
a pair of conductors (11), which have a flat shape and are oppositely spaced in a width direction of the conductors; and
an insulator (12), which wraps around the pair of conductors (11) and forms a cooling passage (10);
wherein the conductor (11) has two side surfaces opposite to each other in the width direction of the conductor, and the cooling passage (10) is located between the side surfaces of the pair of conductors (11), such that the pair of conductors (11) can be cooled by a cooling fluid flowing through the cooling passage (10).

2. The power transmission member according to claim 1, wherein
a single cooling passage (10) is formed in the insulator (12), such that the pair of conductors (11) can be simultaneously cooled by the cooling fluid flowing through the single cooling passage (10).

3. The power transmission member according to claim 1, wherein
two cooling passages (10) are formed in the insulator (12), and the insulator (12) has an intermediate partition wall (12b) for separating the two cooling passages (10); and
the two cooling passages (10) are respectively adjacent to the pair of conductors (11), such that the pair of conductors (11) can be cooled respectively by the cooling fluid flowing through the two cooling passages (10).

4. The power transmission member according to claim 2 or 3, wherein
the insulator (12) has isolation walls (12a) for isolating the cooling passages (10) from the conductors (11), such that the cooling fluid flowing through the cooling passages (10) cannot be in physical contact with the conductors (11).

5. The power transmission member according to claim 1, wherein
the insulator (12) is an injection molded part formed directly on the pair of conductors (11) by means of an insert injection molding process, such that the pair of conductors (11) and the insulator (12) form an integral part.

6. The power transmission member according to claim 1, wherein the pair of conductors of the power transmission member (1) are identical to each other and are usable interchangeably.

7. A power transmission assembly, comprising:
a power transmission member (1) according to any one of claims 1-6; and
an insulating cap (2) sealingly fitted over an end portion of the power transmission member (1),
wherein a pipe joint (20) is formed on the insulating cap (2) and configured to be connected to a connecting pipe of a cooling loop, and the pipe joint (20) is in communication with an end opening of the cooling passage (10) of the power transmission member (1), to allow the cooling fluid to flow into or out of the cooling passage (10) of the power transmission member (1) through the pipe joint (20).

8. The power transmission assembly according to claim 7, wherein
the insulating cap (2) comprises:
a peripheral wall (21) fitted over the end portion of the power transmission member (1); and
an end wall (22) connected to the peripheral wall (21),
wherein the pipe joint (20) is formed on the end wall (22), a threaded hole (103) is formed in an end surface of the insulator (12), and a connection hole corresponding to the threaded hole (103) is formed in the end wall (22); and
the power transmission assembly further comprises a threaded member (2a), the threaded member (2a) passing through the connection hole and being threaded into the threaded hole (103) to fix the insulating cap (2) to the end portion of the power transmission member (1).

9. The power transmission assembly according to claim 8, further comprising:
a seal (3) comprising an annular body (30), wherein the annular body (30) is pressed between the end wall (22) of the insulating cap (2) and an end surface of the power transmission member (1) to achieve sealing between the insulating cap and the power transmission member,
the connection hole and the threaded hole (103) are located outside a region surrounded by the annular body (30) of the seal (3), and the pipe joint (20) and the end opening of the cooling passage (10) of the power transmission member (1) are located inside the region surrounded by the annular body (30) of the seal (3).

10. The power transmission assembly according to claim 9, wherein
two cooling passages (10) are formed in the insulator (12), and the insulator (12) has an intermediate partition wall (12b) for separating the two cooling passages (10) and an isolation wall (12a) for isolating the cooling passages (10) from the conductors (11).

11. The power transmission assembly according to claim 10, wherein
the insulating cap (2) has a single pipe joint (20), the single pipe joint (20) being in communication with the end openings of the two cooling passages (10) of the power transmission member (1), such that the cooling fluid can flow into or out of the two cooling passages (10) simultaneously through the single pipe joint (20).

12. The power transmission assembly according to claim 11, wherein
the insulating cap (2) has two pipe joints (20), the two pipe joints (20) being respectively in communication with the end openings of the two cooling passages (10) of the power transmission member (1), such that the cooling fluid can flow into or out of the two cooling passages (10) respectively through the two pipe joints (20).

13. The power transmission assembly according to claim 12, wherein
the insulating cap (2) further has a partition rib (22b) formed on an inner side of the end wall (22), and the seal (3) further has an isolation rib (31) located in the annular body (30) and connected to the annular body (30); and
the isolation rib (31) of the seal (3) is pressed between the partition rib (22b) of the insulating cap (2) and an end surface of the intermediate partition wall (12b) of the insulator (12), to isolate the end openings of the two cooling passages from the two pipe joints (20).

14. An electrical connection assembly, comprising:
a power transmission member (1) according to any one of claims 1-7 or a power transmission assembly according to any one of claims 8-13;
a first terminal electrically connected to one of the conductors (11) of the power transmission member (1); and
a second terminal electrically connected to the other conductor (11) of the power transmission member (1).

15. An electrical connection device, comprising:
a housing; and
an electrical connection assembly according to claim 14,
wherein the first terminal and the second terminal are mounted in the housing, and the power transmission member (1) is led out of the housing.
